# EUROPÄISCHE PATENTANMELDUNG

(11) **EP 0 734 803 A2**
(43) Veröffentlichungstag der Anmeldung: **02.10.1996**
(21) Anmeldenummer: 96103745.4
(22) Anmeldetag: 09.03.1996
(51) Int. Cl.: B23B 27/06, B23G 5/18

(54) **Drehantreibbares Werkzeug sowie Werkzeugkopf zur Verwendung bei einem solchen Werkzeug**

(30) Priorität: 29.03.1995 DE 19511551
(71) Anmelder: Joh. & Ernst Link GmbH & Co. KG, D-70565 Stuttgart (DE)
(72) Erfinder:
(74) Vertreter: Jackisch-Kohl, Anna-Katharina

(57) **Zusammenfassung**

Das Werkzeug hat einen Halter (1) und einen Werkzeugkopf (2), die jeweils eine axial sie durchsetzende Öffnung aufweisen. Ferner ist ein Zuganker (3) vorgesehen, der sich von dem dem Werkzeugkopf (2) gegenüberliegenden Ende des Halters (1) aus durch die axiale Öffnung erstreckt und mit einer Zugmutter (4) verbunden ist, die an dem dem Werkzeugkopf (2) gegenüberliegenden Halterende vorgesehen ist und mit der durch Drehen eine Zugkraft auf den Zuganker (3) ausübbar ist. Um das Werkzeug und den Werkzeugkopf so auszubilden, daß sie konstruktiv einfach ausgebildet sind und eine preisgünstige und schnelle Fertigung ermöglichen, erstreckt sich der Zuganker (3) durch die axiale Öffnung des Werkzeugkopfes (2), an dem sich unter der Zugkraft wenigstens ein Widerlager (28) des Zugankers (3) abstützt und der unter der Zugkraft axial fest mit dem Halter (1) verbunden ist. Durch Anziehen der Zugmutter (4) wird die erforderliche Zugkraft aufgebracht, unter der der Werkzeugkopf (2) fest gegen den Halter (1) gezogen wird. Zusätzliche Befestigungsmittel für den Werkzeugkopf sind nicht erforderlich.

## Beschreibung

Die Erfindung betrifft ein drehantreibbares Werkzeug nach dem Oberbegriff des Anspruches 1 sowie einen Werkzeugkopf zur Verwendung bei einem solchen Werkzeug nach dem Oberbegriff des Anspruches 9 bzw. 10.

Bei diesem bekannten Werkzeug (EP-B1-0 366 047) ist der Zuganker an beiden Enden mit Gewinde versehen. Der Halter für den Werkzeugkopf besteht aus einem Zwischen- und einem Endteil, die jeweils mit Gewindeabschnitten versehen sind, die mit den Gewindeteilen des Zugankers zusammenwirken. Mit ihm werden die beiden Teile des Halters axial gegeneinander verspannt. Der Werkzeugkopf hat eine axiale Bohrung, durch welche ein Gewindebolzen gesteckt wird, der in eine Gewindebohrung des anschließenden Teils des Halters geschraubt wird. Über den Kopf des Gewindebolzens wird auf diese Weise der Werkzeugkopf gegen den Halter axial verspannt. Dieses Werkzeug ist konstruktiv aufwendig ausgebildet. Der Zusammenbau des Werkzeuges ist aufwendig, da die beiden Halterteile mit dem Zuganker und der Werkzeugkopf über den Gewindebolzen mit dem Halter verbunden werden müssen. Der Werkzeugkopf hat einen einzigen Gewindefräszahn, mit dem ein Gewinde in einem Werkstück hergestellt wird. Hierbei wird das drehangetriebene Werkzeug axial in die Bohrung bewegt, wobei mit dem einzigen Gewindefräszahn das Gewinde gefräst wird. Der einzige Gewindefräszahn muß die gesamte Zerspanungsarbeit aufnehmen, so daß er einem frühzeitigen Verschleiß unterliegt. Außerdem benötigt die Gewindeherstellung aufgrund des nur einen Gewindefräszahns erhebliche Zeit.

Der Erfindung liegt die Aufgabe zugrunde, das gattungsgemäße Werkzeug und den gattungsgemäßen Werkzeugkopf so auszubilden, daß sie konstruktiv einfach ausgebildet sind und eine preisgünstige und schnelle Fertigung ermöglichen.

Diese Aufgabe wird beim gattungsgemäßen Werkzeug erfindungsgemäß mit den kennzeichnenden Merkmalen des Anspruches 1 und beim gattungsgemäßen Werkzeugkopf erfindungsgemäß mit den kennzeichnenden Merkmalen der Ansprüche 9 bzw. 10 gelöst.

Beim erfindungsgemäßen Werkzeug erstreckt sich der Zuganker von einem Ende des Halters aus durch den Werkzeugkopf hindurch, an dem sich der Zuganker mit dem Widerlager abstützt. Durch Anziehen der Zugmutter wird die erforderliche Zugkraft aufgebracht, unter der der Werkzeugkopf fest gegen den Halter gezogen wird. Zusätzliche Befestigungsmittel für den Werkzeugkopf sind nicht erforderlich, so daß das erfindungsgemäße Werkzeug nicht nur einfach und schnell montiert werden kann, sondern auch entsprechend preisgünstig gefertigt werden kann.

Der erfindungsgemäße Werkzeugkopf kann mit dem Steckansatz einfach in den Halter gesteckt werden, so daß eine einfache Ausrichtung des Werkzeugkopfes gegenüber dem Halter gewährleistet ist. Mit den Gewindefräszähnen, die in wenigstens zwei Radialebenen angeordnet sind, können Gewinde rasch und einfach gefertigt werden. Da mehrere Gewindefräszähne vorgesehen sind, kann die Zerspanungsarbeit entsprechend verteilt werden, so daß die einzelnen Zähne nur einem geringen Verschleiß unterliegen. Vorteilhaft ist hierbei, die Gewindefräszähne mit einem Anschnitt zu versehen, so daß erst nach und nach das volle Gewinde gefräst wird. Anstelle der Gewindefräszähne kann der erfindungsgemäße Werkzeugkopf auch mit Formfrässchneiden ausgestattet sein, so daß in einem Werkstück die unterschiedlichsten Formen gefräst werden können.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in Seitenansicht und teilweise im Axialschnitt einen erfindungsgemäßen Aufsteckfräser,
- Fig. 2: in verkleinerter Darstellung und in Seitenansicht einen Halter des erfindungsgemäßen Aufsteckfräsers gemäß Fig. 1,
- Fig. 3: in vergrößerter Darstellung eine Ansicht in Richtung des Pfeiles III in Fig. 2,
- Fig. 4: in vergrößerter Darstellung eine Ansicht in Richtung des Pfeiles IV in Fig. 2,
- Fig. 5: in vergrößerter Darstellung und im Axialschnitt die Einzelheit x in Fig. 2,
- Fig. 6: im Axialschnitt einen Fräskopf des erfindungsgemäßen Aufsteckfräsers gemäß Fig. 1,
- Fig. 7: eine Ansicht in Richtung des Pfeiles VII in Fig. 6,
- Fig. 8: eine Ansicht in Richtung des Pfeiles VIII in Fig. 6,
- Fig. 9: in vergrößerter Darstellung und im Axialschnitt die Einzelheit y in Fig. 6,
- Fig. 10 bis Fig. 17: jeweils teilweise in Ansicht und teilweise im Axialschnitt verschiedene Ausführungsformen von Fräsköpfen für den erfindungsgemäßen Aufsteckfräser gemäß Fig. 1,
- Fig. 18: in einer Darstellung entsprechend Fig. 2 eine zweite Ausführungsform eines erfindungsgemäßen Aufsteckfräsers,
- Fig. 19: in vergrößerter Darstellung und teilweise im Schnitt das den Fräskopf aufweisende Ende des Aufsteckfräsers gemäß Fig. 18,
- Fig. 20: in vergrößerter Darstellung einen Schnitt längs der Linie XX-XX in Fig. 18,
- Fig. 21: einen Axialschnitt durch den Aufsteckfräser gemäß Fig. 18.

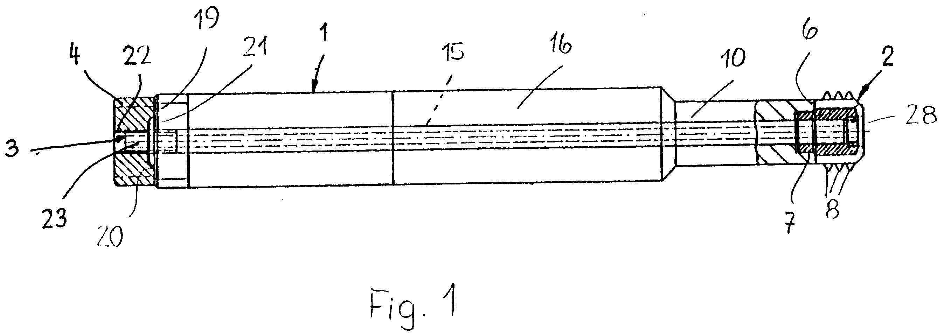

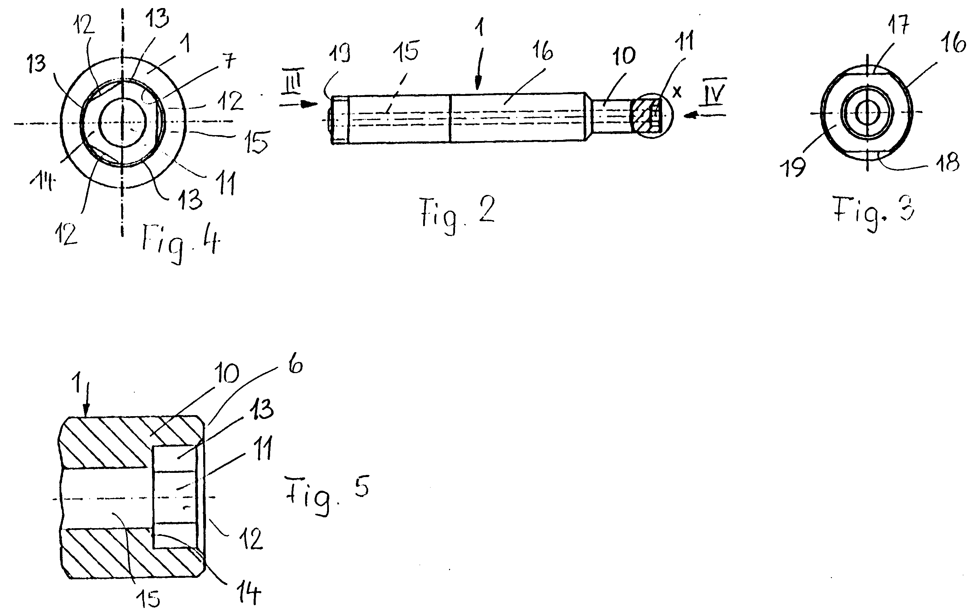

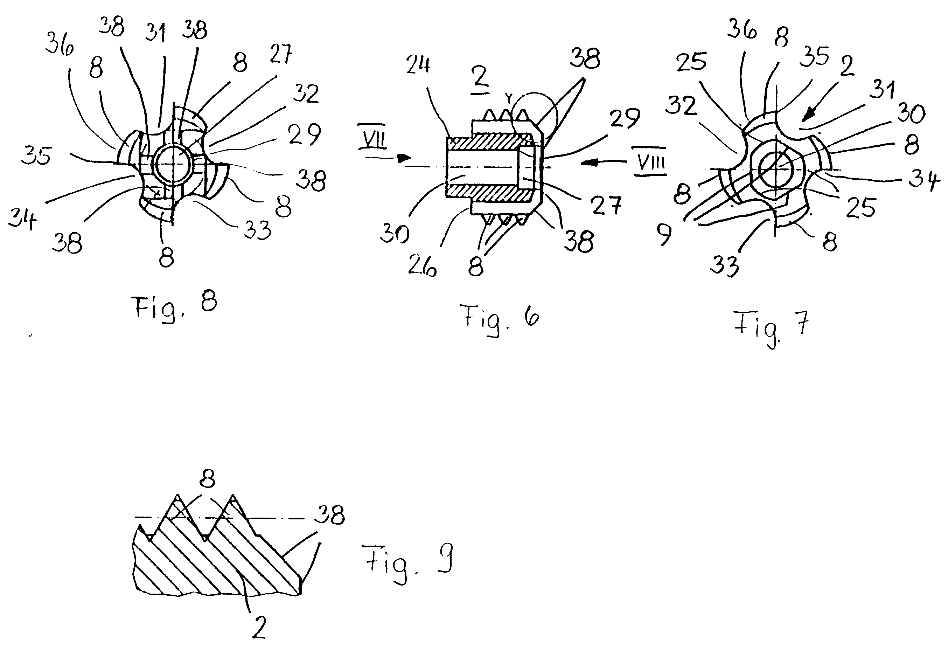

Der Aufsteckfräser ist ein modulares Vollhartmetallwerkzeug zur spanenden Herstellung von Gewinden, Fasen und Plansenkungen. Der Aufsteckfräser ist besonders für die Zerspanung an tief liegenden, schlecht zugänglichen Stellen oder für Gewinde mit großer Tiefe geeignet. Der Aufsteckfräser besteht im wesentlichen aus einem Halter 1 (Fig. 1), einem Fräskopf 2, einem Zuganker 3 und einer Zugmutter 4. Der Fräskopf 2 und der Halter 1 sind über eine Plananlage 6 und einen Paßsitz 7 miteinander verbunden, wodurch eine hohe Rundlaufgenauigkeit des Fräskopfes 2 erreicht wird. Dadurch wird es möglich, auf dem Fräskopf 2 mehrere Gewindefräszähne 8 in axialer Richtung anzubringen. Die Verdrehsicherung des Fräskopfes 2 im Halter 1 erfolgt formschlüssig über eine oder mehrere ebene Flächen 9 (Fig. 7) an einem Paßsitz 25 des Fräskopfes 2. Der Halter 1 ist mit der entsprechenden Negativform versehen. In axialer Richtung wird der Fräskopf 2 mittels der Zugmutter 4 und des Zugankers 3 am Halter 1 befestigt. Der Zuganker 3 ist für eine innere Kühlmittelzufuhr vorzugsweise hohl ausgebildet.

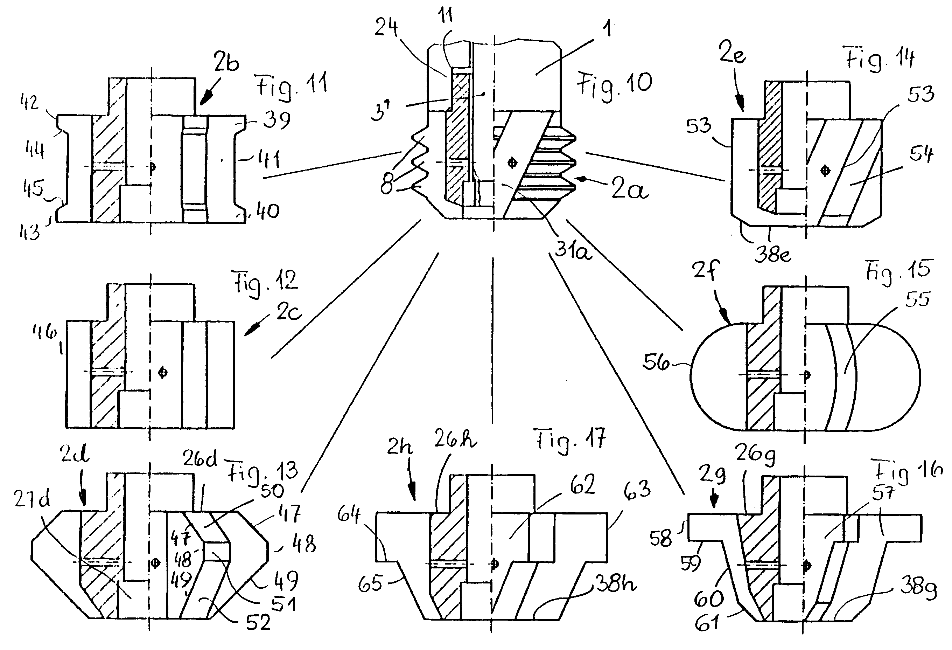

Der Halter 1 hat einen im Durchmesser verjüngten Abschnitt 10 (Fig. 2), in dessen Stirnseite zentrisch eine Vertiefung 11 vorgesehen ist. Die Seitenwand dieser Vertiefung 11 bildet einen Paßsitz 13 für den Fräskopf 2. Zur Anpassung an die Querschnittsform des Steckteils des Fräskopfes 2 weist der Paßsitz 13 ebene Flächen 12 auf (Fig. 4), an denen der Fräskopf 2 bei montierter Lage mit seinen Flächen 9 flächig anliegt. Auf diese Weise ist eine einfache Verdrehsicherung des Fräskopfes 2 im Halter 1 gewährleistet. Die Flächen 12 bzw. 9 liegen in Winkelabständen von 120° zueinander. Selbstverständlich reicht auch nur eine einzige Fläche aus, um die gewünschte Verdrehsicherung des Fräskopfes 2 im Halter 1 zu erreichen. Die Fläche muß auch nicht eben ausgebildet sein; es reicht aus, wenn sie eine von der Kreisform abweichende Formgebung hat.

Im dargestellten Ausführungsbeispiel hat die Vertiefung 11 drei ebene Flächen 12, die durch teilzylindrische Paßflächen 13 miteinander verbunden sind.

In den Boden 14 der Vertiefung 11 mündet zentrisch eine Axialbohrung 15, die den Halter 1 zentrisch axial durchsetzt und durch die der Zuganker 3 ragt.

Die Stirnseite des Halterabschnittes 10 liegt radial zur Achse des Halters 1 und bildet die ebene Plananlage 6 für den Fräskopf 2 (Fig. 5).

Der verjüngte Abschnitt 10 geht in einen im Durchmesser größeren Schaftteil 16 über, der sich über die ganze restliche Länge des Halters 1 erstrecken kann. Der Schaftteil 16 ist am Umfang und am vom Halterabschnitt 10 abgewandten Ende mit diametral einander gegenüberliegenden Abflachungen 17 und 18 versehen (Fig. 3), die eben sind und auf die ein Gabelschlüssel zur Drehsicherung gesteckt werden kann, wenn die Zugmutter 4 angezogen wird. Die vom Halterabschnitt 10 abgewandte Stirnseite 19 des Schaftteils 16 ist eben und dient zur Anlage der Zugmutter 4.

Wie Fig. 1 zeigt, liegt die Zugmutter 4 auf der Stirnseite 19 des Schaftteils 16 auf. Die der Stirnseite 19 zugewandte Seite 20 der Zugmutter 4 hat eine zentrale Vertiefung 21, die zur Zentrierung der Zugmutter 4 gegenüber dem Halter 1 dient, der eine der Vertiefung 21 entsprechende Gegenkontur hat. Die Zugmutter 4 liegt mit einer Ringfläche auf der Stirnseite 19 des Schaftteils 16 auf. Die Zugmutter 4 wird zentrisch von einer axialen Gewindebohrung 22 durchsetzt, in die ein an einem Ende des Zugankers 3 vorgesehenes Gewindestück 23 geschraubt ist. Um den Fräskopf 2 am Halter 1 zu befestigen, wird die Zugmutter 4 so gedreht, daß das Gewindestück 23 in die Zugmutter geschraubt wird. Hierbei wird mit einem Gabelschlüssel der Schaftteil 16 während des Schraubvorganges festgehalten.

Der Fräskopf 2 (Fig. 6 bis 9) hat einen axialen Ansatz 24, der in die Vertiefung 11 (Fig. 5) des Halterabschnittes 10 gesteckt wird. Der Ansatz 24 ist außenseitig mit den ebenen Flächen 9 versehen, die bei montiertem Fräskopf 2 an den Flächen 12 des Halterabschnittes 10 anliegen. Die Flächen 9 sind durch teilzylindrische Paßflächen 25 miteinander verbunden, die in der Einbaulage an den teilzylindrischen Paßflächen 13 des Halterabschnittes 10 anliegen.

Der Fräskopf 2 hat eine Ringfläche 26, die in einer Radialebene liegt und mit der der Fräskopf 2 an der Stirnseite 6 des Halters 1 anliegt. In der Einbaulage hat der Ansatz 24 des Fräskopfes 2 axialen Abstand vom Boden 14 der Vertiefung 11 des Halters 1 (Fig. 1), so daß sichergestellt ist, daß der Fräskopf 2 mit seiner Ringfläche 26 zuverlässig an der Stirnseite 6 anliegt.

Der Fräskopf 2 weist an der dem Ansatz 24 gegenüberliegenden Stirnseite eine zentrale Vertiefung 27 auf, die ein Widerlager 28 des Zugankers 3 aufnimmt (Fig. 1). Es ist vorzugsweise ein Ring, der in der Einbaulage auf dem ringförmigen Boden 29 (Fig. 6) der Vertiefung 27 des Fräskopfes 2 aufliegt. Der Ringboden 29 umgibt eine den Fräskopf 2 zentrisch durchsetzende Axialbohrung 30, durch welche der Zuganker 3 verläuft und die mit der Axialbohrung 15 des Halters 1 fluchtet. Vorzugsweise hat die Axialbohrung 30 gleichen Durchmesser wie die Axialbohrung 15 des Halters 1 (Fig. 1).

Beim Anziehen der Zugmutter 4 wird über das Widerlager 28 der Fräskopf 2 fest gegen den Halter 1 gezogen und dadurch axial fest mit ihm verbunden.

Wie Fig. 6 zeigt, hat der Fräskopf 2 axial hintereinander liegende Gewindeschneidzähne 8, die in drei Radialebenen des Fräskopfes 2 angeordnet sind. Wie die Fig. 7 und 8 zeigen, hat der Fräskopf mehrere axial verlaufende Spannuten 31 bis 34, die in gleichen Winkelabständen voneinander angeordnet sind. Die Gewindefräszähne 8 haben jeweils Schneidkanten 35, die in einer Radialebene des Fräskopfes 2 liegen. Die an die Schneidkanten 35 entgegen Drehrichtung anschließende Umfangsfläche 36 erstreckt sich zur Bildung eines Freiwinkels in bezug auf den durch die Schneidkantenspitze der Gewindefräszähne 8 gehenden Flugkreis des Fräskopfes 2 nach innen.

Der Fräskopf 2 hat außerdem Stirnschneiden 38, die etwa radial angeordnet sind. Im dargestellten Ausführungsbeispiel hat der Fräskopf 2 vier Stirnschneiden 38, die in Winkelabständen von 90° zueinander angeordnet sind. Dadurch können mit dem Fräskopf 2 auch Fasen und Plansenkungen an den Werkstücken angebracht werden. Die Stirnschneiden 38 erstrecken sich, wie insbesondere Fig. 9 zeigt, schräg bis zur Mantelfläche des Fräskopfes 2, so daß mit diesen schräg liegenden Bereichen der Stirnschneiden 38 die Fasen hergestellt werden können.

Der Fräskopf 2 und der Halter 1 werden mittels des Zugankers 3 und der Zugmutter 4 axial fest miteinander verbunden. Der Halter 1 wird dann in eine Spannvorrichtung einer entsprechenden Maschine eingesetzt. Die Herstellung eines Gewindes in einem Werkstück kann bei einfach zu zerspanenden Werkstoffen unter Ausnutzung sämtlicher auf dem Fräskopf 2 vorhandener Gewindefräszähne 8 erfolgen. Dadurch ergeben sich äußerst kurze Fertigungszeiten. Bei n Gewindeteilungen auf dem Fräskopf 2 in Achsrichtung werden bei einem Fräsumlauf im Werkstück n Gewindegänge gleichzeitig hergestellt. Anschließend kann der Aufsteckfräser in axialer Richtung um den Betrag n mal Steigung des Gewindes versetzt und die nächsten Gewindegänge gefräst werden.

Bei neueren Werkzeugmaschinen mit hochdynamischen Antrieben kann das Gewinde im Werkstück mit dem Aufsteckfräser auch Gang für Gang gefräst werden. Hierbei wird der Aufsteckfräser umlaufend bewegt, während er sich gleichzeitig um seine Achse dreht. Diese Vorgehensweise ist auch für schwer zu zerspanende Werkstoffe geeignet.

Um schwer zerspanbare Werkstoffe einfach fräsen zu können, ist der Fräskopf 2 vorteilhaft mit einem Anschnitt versehen, so daß die Zerspanarbeit bei der Gewindeherstellung auf mehrere Gewindefräszähne 8 in axialer Richtung verteilt wird. Um eine optimale Oberflächengüte des gefrästen Gewindes zu erzielen, haben die Anschnittzähne vorteilhaft einen kleineren Flankendurchmesser als der bzw. die Fertigschneidzähne. Das Gewinde wird hierbei Gang für Gang zirkular gefräst, wobei der Aufsteckfräser umlaufend bewegt und gleichzeitig um seine Achse drehbar angetrieben wird.

Der Fräskopf wird vorteilhaft aus Vollhartmetall oder Cermet gefertigt. Es können auch eingelötete Schneidteile aus PKD oder CBN verwendet werden.

Mit dem beschriebenen Aufsteckfräser ist es möglich, ein Gewinde in einem Werkstück in herkömmlicher Weise zu fräsen, wobei durch mehrmaliges Ansetzen die gewünschte Gewindelänge hergestellt werden kann. Außerdem ist es möglich, ein Gewinde durch Zirkularfräsen zu fertigen, indem der Gewindefräser auf einer Spiralbahn sämtliche Gewindegänge nacheinander ausfräst. Dabei wird der Aufsteckfräser umlaufend bewegt und um seine Achse drehbar angetrieben.

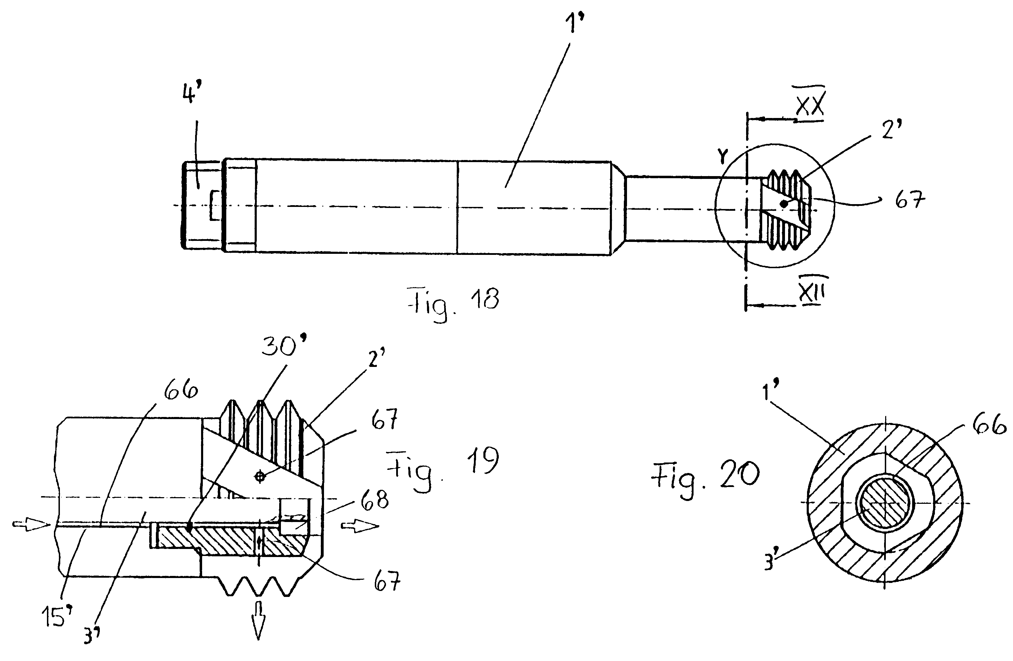

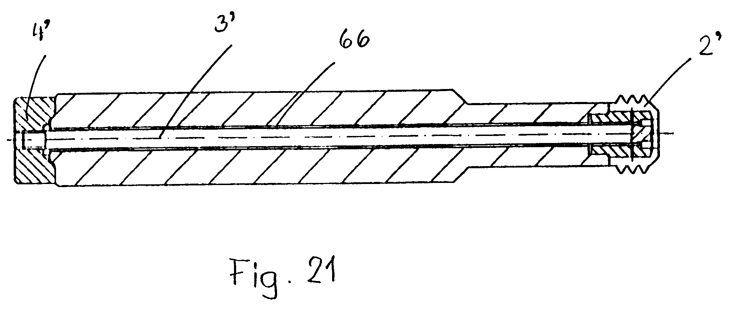

Die Fig. 10 bis 17 zeigen verschiedene Ausführungsformen von Fräsköpfen. Ihnen allen ist gemeinsam, daß sie in der beschriebenen Weise mit dem Zuganker 3 und der Zugmutter 4 am Halter 1 befestigt werden. Jeder Fräskopf hat den Ansatz 24, mit dem er, wie Fig. 10 nochmals zeigt, in die Vertiefung 11 an der Stirnseite des Halters 1 eingesetzt werden kann. Der Zuganker 3' ist abweichend von der Ausführungsform nach den Fig. 1 bis 5 massiv ausgebildet, wie es anhand der Fig. 18 bis 21 noch näher erläutert werden wird. Der Zuganker kann selbstverständlich auch hohl ausgebildet werden.

Der Fräskopf 2a gemäß Fig. 10 hat die in Radialebenen liegenden Gewindefräszähne 8, die durch die Spannuten 31a unterbrochen sind, die im Gegensatz zur Ausführungsform nach den Fig. 1 bis 9 Steigung haben. Im übrigen ist dieser Fräskopf 2a gleich ausgebildet wie der Fräskopf gemäß den Fig. 6 bis 9.

Der Fräskopf 2b nach Fig. 11 hat mit axialem Abstand voneinander liegende Fräszähne 39 und 40, die in zwei Radialebenen des Fräskopfes liegen. Die beiden Radialebenen sind an den beiden Stirnseiten des Fräskopfes 2b vorgesehen. Im Bereich zwischen den Fräszahnebenen 39, 40 hat der Fräskopf 2b einen zylindrischen Mantel 41, dessen Durchmesser kleiner ist als der Außendurchmesser der Fräszähne 39, 40. Die Fräszähne 39, 40 haben in einer gedachten Zylinderfläche liegende Schneiden 42, 43 sowie an ihren einander zugewandten Seiten in Richtung auf die Achse des Fräskopfes 2b konvergierende Schneiden 44 und 45.

Der Fräskopf 2c gemäß Fig. 12 hat über seine gesamte axiale Länge verlaufende Schneiden 46, mit denen eine Bohrung in einem Werkstück gefräst werden kann. Zwischen den einzelnen Fräszähnen befinden sich Spannuten, die axial oder steigend verlaufen können.

Der Fräskopf 2d gemäß Fig. 13 ist als Formfräser ausgebildet. Er hat von seiner Ringfläche 26d radial schräg nach außen verlaufende Schneiden 47, die in auf einem gedachten Zylindermantel liegende Schneiden 48 übergehen, die parallel zur Drehachse des Fräskopfes 2d liegen. Diese Schneiden 48 sind über radial schräg nach innen verlaufende Schneiden 49 mit der die Vertiefung 27d aufweisenden Stirnseite des Fräskopfes 2d verbunden. Die Schneiden 47 und 49 sind somit in Richtung auf die Schneiden 48 konvergierend angeordnet und jeweils gerade verlaufend ausgebildet. Zwischen den Schneiden 47 bis 49 befinden sich wiederum die Spannuten. Die Schneiden 47 bis 49 sind an radial vom Fräskopf 2d abstehenden Fräszähnen vorgesehen, die in Radialansicht jeweils drei aneinanderschließende rechteckförmige Flächen 50 bis 52 aufweisen.

Der Fräskopf 2e gemäß Fig. 14 hat auf einem gedachten Zylindermantel, dessen Achse - wie bei den Ausführungsformen gemäß den Fig. 11 bis 13 - durch die Fräskopfachse gebildet ist, liegende Schneiden 53, die im Gegensatz zu den Schneiden 46 des Fräskopfes 2c gemäß Fig. 12 eine Steigung haben. Der Fräskopf 2e hat außerdem die Stirnschneiden 38e, die in der Stirnseite des Fräskopfes 2e liegende Abschnitte sowie radial schräg außen liegende Schneidabschnitte aufweisen, mit denen Fasen hergestellt werden können. Zwischen den Fräszähnen 54 befinden sich die Spannuten. Mit diesem Fräskopf 2e kann eine Bohrung gefräst werden, wobei gleichzeitig mit den Stirnschneiden 38e eine Plansenkung sowie eine Fase angebracht werden können.

Der Fräskopf 2f gemäß Fig. 15 ist als Formfräser ausgebildet, mit dem Bohrungen mit einer teilkreisförmig gekrümmten Wandung gefräst werden können. Der Fräskopf hat über seinen Umfang verteilt und durch Spannuten voneinander getrennt angeordnete Fräszähne 55, die teilkreisförmigen Umriß haben. Ihre Schneiden 56 verlaufen dementsprechend teilkreisförmig, vorzugsweise halbkreisförmig. Die Schneiden 56 erstrecken sich über die axiale Länge des Fräskopfes 2f.

Der Fräskopf 2g nach Fig. 16 ist ebenfalls als Formfräser ausgebildet und hat über seinen Umfang verteilt angeordnete Fräszähne 57, die sich ebenfalls über die axiale Länge des Fräskopfes 2g erstrecken. Sie haben einen an die Ringfläche 26g anschließenden, in Ansicht rechteckigen Abschnitt mit einer achsparallelen Schneide 58, die sich von der Höhe der Ringfläche 26g aus erstreckt und rechtwinklig an eine radial nach innen sich erstreckende Schneide 59 anschließt. Sie geht stumpfwinklig in eine gerade Schneide 60 über, die sich bis nahe an die Stirnseite des Fräskopfes 2g erstreckt und ihrerseits stumpfwinklig an eine weitere Schneide 61 anschließt. Sie erstreckt sich bis zur ebenen Stirnseite des Fräskopfes 2g. Mit der Schneide 61 können Fasen hergestellt werden. Diese Schneide 61 geht in die Stirnschneide 38g über. Mit den Stirnschneiden 38g können Plansenkungen vorgenommen werden. Die zur Herstellung der Fasen dienenden Schneiden 61 sind wesentlich kürzer als die Schneiden 60, mit denen eine Bohrungswandung entsprechend kegelig gefräst werden kann.

Der Fräskopf 2h hat ebenfalls über den Umfang verteilt angeordnete Fräszähne 62, die ähnlich wie bei der Ausführungsform nach Fig. 16 die achsparallelen Schneiden 63 haben. Sie sind im Vergleich zur Ausführungsform nach Fig. 16 länger als die Schneiden 58. Die Schneiden 63 erstrecken sich von der Ringfläche 26h des Fräskopfes 2h aus und gehen rechtwinklig in radial nach innen gerichtete Schneiden 64 über. Sie schließen stumpfwinklig an schräg nach innen verlaufende, gerade Schneiden 65 an, die sich bis zur Stirnseite des Fräskopfes 2h erstrecken. Die Schneiden 65 können an Stirnschneiden 38h anschließen. Der Fräskopf 2h kann aber auch ohne solche Stirnschneiden ausgebildet sein. Wie beim vorigen Ausführungsbeispiel liegen zwischen den Fräszähnen 62 die Spannuten.

Die verschiedenen Ausführungsbeispiele nach den Fig. 10 bis 17 zeigen, daß im Halter 1 nicht nur Gewindefräsköpfe, sondern auch Formfräsköpfe oder einfache Bohrfräser in der beschriebenen Weise befestigt werden können. Die Fräsköpfe können die unterschiedlichsten Ausbildungen haben. Sie werden auf die gleiche Weise, wie dies anhand der Fig. 1 bis 9 beschrieben worden ist, am Halter 1 mittels Zuganker 3 und Zugmutter 4 gehalten.

Der Aufsteckfräser gemäß den Fig. 18 bis 21 hat den Halter 1', an dem der Fräskopf 2' in der beschriebenen Weise befestigt werden kann. Der Fräskopf 2' kann eine Ausbildung entsprechend den zuvor beschriebenen Ausführungsbeispielen haben. Der Fräskopf 2' wird mit dem Zuganker 3' und der Zugmutter 4' ebenfalls in der beschriebenen Weise am Halter 1' befestigt. Der Zuganker 3' ist im Gegensatz zur Ausführungsform nach den Fig. 1 bis 5 massiv ausgebildet. Der Außendurchmesser des Zugankers 3' ist kleiner als der Durchmesser der Axialbohrung 15', so daß in der Einbaulage im Halter 1' ein den Zuganker 3' umgebender Ringkanal 66 gebildet wird.

Die Axialbohrung 30' des Fräskopfes 2' hat größeren Durchmesser als die Zugstange 3', so daß sich der Ringkanal 66 im Fräskopf 2' fortsetzt. Dieser Ringkanal 66 dient zur Zuführung von Kühlmittel. Der Fräskopf 2' hat wenigstens eine radial ihn durchsetzende Bohrung 67 (Fig. 18 und 19), die in den Ringkanal 66 und in die Spannut des Fräskopfes 2' mündet. Das Kühlmittel kann dadurch während des Bearbeitungsvorganges unmittelbar im Arbeitsbereich aus der Bohrung 67 austreten. Vorteilhaft ist in jeder Spannut des Fräskopfes 2' eine solche Bohrung 67 vorgesehen, die auch schräg zur Achse des Aufsteckfräsers liegen kann.

Vorteilhaft mündet der Ringkanal 66 in wenigstens einen axial verlaufenden Schlitz 68 des Fräskopfes 2', so daß das Kühlmittel auch an der Stirnseite des Aufsteckfräsers in Richtung des in Fig. 19 dargestellten Pfeiles austritt. Vorteilhaft sind über den Umfang des Fräskopfes 2' mehrere solcher Schlitze 68 für den Austritt des Kühlmittels vorgesehen. Dadurch tritt das Kühlmittel auch im Bereich der Stirnschneiden des Fräskopfes 2' aus.

Die Zuführung des Kühlmittels von der Kühlmittelquelle aus erfolgt vom zugmutterseitigen Ende des Aufsteckfräsers. Hier kann das Kühlmittel über eine geeignete Zuführung in den Ringkanal 66 eingebracht werden.

Im übrigen ist der Aufsteckfräser gleich ausgebildet wie das Ausführungsbeispiel nach den Fig. 1 bis 5. Der Fräskopf 2' entspricht hinsichtlich der Kühlmittelzuführung dem Ausführungsbeispielen gemäß den Fig. 10 bis 17. Werden diese Fräsköpfe bei einem Aufsteckfräser verwendet, dessen Zuganker hohl ausgebildet ist, sind die Kühlmittelbohrungen 67 und die Kühlmittelschlitze 68 nicht erforderlich.

## Patentansprüche

1. Drehantreibbares Werkzeug mit einem Halter und einem Werkzeugkopf, die jeweils eine axial sie durchsetzende Öffnung aufweisen, mit einem Zuganker, der sich von dem dem Werkzeugkopf gegenüberliegenden Ende des Halters aus durch die axiale Öffnung erstreckt und mit einer Zugmutter verbunden ist, die an dem dem Werkzeugkopf gegenüberliegenden Halterende vorgesehen ist und mit der durch Drehen eine Zugkraft auf den Zuganker ausübbar ist,
dadurch gekennzeichnet, daß sich der Zuganker (3, 3') durch die axiale Öffnung (30, 30') des Werkzeugkopfes (2, 2', 2a bis 2h) erstreckt, an dem sich unter der Zugkraft wenigstens ein Widerlager (28) des Zugankers (3, 3') abstützt und der unter der Zugkraft axial fest mit dem Halter (1, 1') verbunden ist.

2. Werkzeug nach Anspruch 1,
dadurch gekennzeichnet, daß das Widerlager (28) des Zugankers (3, 3') in einer stirnseitigen Vertiefung (27, 27d) des Werkzeugkopfes (2, 2', 2a bis 2h) liegt.

3. Werkzeug nach Anspruch 1 oder 2,
dadurch gekennzeichnet, daß der Werkzeugkopf (2, 2', 2a bis 2h) einen Steckansatz (24) aufweist, mit dem er in die axiale Öffnung (15, 15') des Halters (1, 1') steckbar ist, und daß vorzugsweise der Steckansatz (24) eine Verdrehsicherung für den Werkzeugkopf (2, 2', 2a bis 2h) bildet.

4. Werkzeug nach Anspruch 3,
dadurch gekennzeichnet, daß der Steckansatz (24) eine von einer Kreisform abweichende Umrißform hat und vorteilhaft mindestens eine Abschrägung (9) in seiner Außenfläche aufweist.

5. Werkzeug nach Anspruch 4,
dadurch gekennzeichnet, daß die axiale Öffnung (15, 15') des Halters (1, 1') zumindest im Bereich des Steckansatzes (24) des Werkzeugkopfes (2, 2', 2a bis 2h) in der Umrißform an die Umrißform des Steckansatzes (24) angepaßt ist.

6. Werkzeug nach einem der Ansprüche 1 bis 5,
dadurch gekennzeichnet, daß der Werkzeugkopf (2, 2', 2a bis 2h) mit einer Planfläche (26, 26d, 26g, 26h) an einer planen Gegenfläche (6) des Halters (1, 1') anliegt.

7. Werkzeug nach einem der Ansprüche 1 bis 6,
dadurch gekennzeichnet, daß der Zuganker (3) hohl ausgebildet ist.

8. Werkzeug nach einem der Ansprüche 1 bis 6,
dadurch gekennzeichnet, daß der Zuganker (3') massiv ausgebildet ist und vorteilhaft sein Außendurchmesser kleiner ist als die lichte Weite der axialen Öffnung (15') des Halters (1').

9. Werkzeug nach einem der Ansprüche 1 bis 8,
dadurch gekennzeichnet, daß die Zugmutter (4, 4') unter der vom Zuganker (3, 3') ausgeübten Zugkraft am Halter (1, 1') anliegt, der vorzugsweise im Bereich der Zugmutter (4, 4') mit Abflachungen (17, 18) versehen ist.

10. Werkzeugkopf, insbesondere zur Verwendung bei einem Werkzeug gemäß einem der Ansprüche 1 bis 9,
dadurch gekennzeichnet, daß der Werkzeugkopf (2, 2') einen Steckansatz (24) aufweist und mit Gewindefräszähnen (8) versehen ist, die in wenigstens zwei mit axialem Abstand angeordneten Radialebenen liegen, und daß vorteilhaft der Werkzeugkopf (2, 2') Stirnschneiden (38) und/oder Schneiden (38) zur Herstellung von Fasen aufweist.

11. Werkzeugkopf, insbesondere zur Verwendung bei einem Werkzeug nach einem der Ansprüche 1 bis 9,
dadurch gekennzeichnet, daß der Werkzeugkopf (2a bis 2h) einen Steckansatz (24) aufweist und mit Formfrässchneiden (42 bis 49, 53, 56, 58 bis 61, 63 bis 65) versehen ist.

12. Werkzeugkopf nach Anspruch 10 oder 11,
dadurch gekennzeichnet, daß der Werkzeugkopf (2, 2', 2a bis 2h) mit einer in einer Radialebene liegenden, vorteilhaft als Ringfläche ausgebildeten Anlagefläche (26, 26d, 26g, 26h) ragt und der Werkzeugkopf (2, 2', 2a bis 2h) von einer axialen Öffnung (30, 30') durchsetzt ist.

13. Werkzeugkopf nach einem der Ansprüche 10 bis 12,
dadurch gekennzeichnet, daß der Werkzeugkopf (2, 2', 2a bis 2h) an seiner dem Steckansatz (24) gegenüberliegenden Seite mit einer stirnseitigen Vertiefung (11) versehen ist.

14. Werkzeugkopf nach einem der Ansprüche 10 bis 13,
dadurch gekennzeichnet, daß der Steckansatz (24) einen von einer Kreisform abweichenden Umriß hat und vorzugsweise an seiner Außenseite mit mindestens einer Abflachung (9) versehen ist.
